# EUROPEAN PATENT SPECIFICATION

(11) **EP 3 981 744 B1**
(45) Date of publication and mention of the grant of the patent: **26.06.2024**
(21) Application number: 20201117.7
(22) Date of filing: 09.10.2020
(51) Int. Cl.: C02F 3/34, C02F 1/14, C02F 1/40, C02F 3/32

(54) **FACILITY AND METHOD FOR TREATMENT OF SALINE WASTEWATER**
ANLAGE UND VERFAHREN ZUR BEHANDLUNG VON SALZHALTIGEM ABWASSER
INSTALLATION ET PROCÉDÉ POUR LE TRAITEMENT D'EAUX USÉES SALÉES

(43) Date of publication of application: 13.04.2022
(73) Proprietor: Bauer Resources GmbH, 86529 Schrobenhausen (DE)
(72) Inventor: KRONBORG ALEXANDERSEN, Dennis, Al Mina Muscat (OM); HEADLEY, Tom, NSW, 2316 (AU); POLVERINI, Dario, Al Mina Muscat (OM); PRIGENT, Stephane, Al Mina Muscat (OM)
(74) Representative: Wunderlich & Heim Patentanwälte PartG mbB

(56) References cited:
- WO-A2-2009/000845
- CN-B- 104 591 398
- US-A1- 2011 272 349

## Description

The invention relates to a facility for treatment of saline water containing oil or other contaminants, comprising a feeding duct for supplying the saline water and at least one treatment basin integrated in a natural or artificial topography, the treatment basin being adapted for physically and biologically treating the saline water, according to the preamble of claim 1.

Furthermore, the invention relates to a method for treatment of saline water containing oil or other contaminants, including the following steps: supplying the saline water by a feeding duct to at least one treatment basin integrated in a natural or artificial topography, and treating the saline water in the periphyton bioreactor basin through physical and biological means, while the saline water flows through the treatment basin from an inlet to an outlet, according to the preamble of claim 11.

There are many examples where human and industrial activity leads to the generation of contaminated saline waters which require treatment to improve water quality prior to reuse or discharge into the environment. For example, through the process of intensive farming of marine species (finfish, shellfish, crustaceans and marine plants) in aquaculture facilities (mariculture), the saline water becomes contaminated with organic contaminants, nutrients and pathogens from animal waste, feeds and fertilizers. This water needs to be circulated through a treatment system in order to maintain the water quality within acceptable limits for the production process, or it needs to be cleaned to an acceptable level before it is disposed of to the sea or other water body.

In the oil production industry, oil extracting facilities generate considerable quantities of saline water contaminated with oil residues and containing high proportions of salt, so called "produced water", which is also referred to as process water or industrial waste water and stems from exploitation of crude oil or gas. The safe and environmentally friendly disposal of this produced water poses a fundamental challenge, especially in countries located in arid climatic zones, where the contamination of scarce drinking water resources is to be prevented by all means.

Globally, approximately 40 million m³ of produced water are generated each day from oil and gas fields with approximately 40% of this discharged to the environment. This water can be contaminated with petroleum oils, phenols, emulsifiers and a large diversity of metal ions in variable concentrations. Moreover, the water has a relatively high salt content. Commonly practiced methods of disposal into deeper lying water-bearing strata and the injection into aquifers no longer satisfy the continuously growing demands of environmental regulations. In addition, these measures are costly due to the high energy demand, making them very inefficient from an economical viewpoint. A treatment facility and method of the related art is known from EP 2 213 629 B1. Such a treatment plant is successfully in use in the Sultanate of Oman and using several constructed wetland basins with aquatic plants being salt tolerant. For reducing the oil content in the water by the action of plants, the water to be treated is flowing through the constructed wetland basin.

WO 2009/00845 A1 discloses a facility and a respective method for the treatment of produced water from an oil well facility. The produced water is separated in an oil-water separator in a crude oil fraction and in a fraction of oil contaminated produced water. Subsequently, at least a fraction of produced water is fed into an irrigation system with a cascade of soil beds for biological purification and reduction of the oil and metals content.

US 2011/272 349 A1 discloses a facility according to the preamble of claim 1. Such facility mainly utilizes salt tolerant plants for the treatment of polluted water.

A limitation of such methods involving the growing of plants in a system to biologically treat water is that above a certain water salinity (approximately seawater salinity), it becomes difficult or eventually impossible to grow plants in the system. Thus, a central defining element of the concept (the vegetation) becomes unviable.

CN 104 591 398 B shows an installation for cleaning water in a lake without having a negative effect on the landscape. Again, mainly plants are used above a bamboo retaining wall for cleaning purposes. The installation may not be used with water having high salinity as the utilized plants would not survive. Periphyton mats may not develop in this installation.

WO 2009/000 845 A2 shows an installation for cleaning effluent water from an oil well. Salt tolerant plants are used instead of periphyton mats, and the treated water does not have a high salinity.

US 5 254 252 shows how periphyton on vertical porous screens may be used in cleaning freshwater systems from unwanted chemicals, such as phosphorus. Fishes are used for fostering the periphyton in the relatively profound installation.

A limitation of such methods involving the growing of plants in a system to biologically treat water is that above a certain water salinity (approximately seawater salinity), it becomes difficult or eventually impossible to grow plants in the system. Thus, a central defining element of the concept (the vegetation) becomes unviable.

The invention is based on the **objective** to provide a facility and method for the treatment of saline water containing oil or other contaminants, such as produced water, providing a high cleaning efficiency in a simplified manner.

The invention solves this objective by a facility for treatment of saline water having the features in accordance with claim 1 and by a method for the treatment of saline water having the features in accordance with claim 11. Advantageous embodiments of the invention are stated in the dependent claims.

The inventive facility for treatment of saline water is characterized by the characterising features of claim 1, especially in that at least one treatment basin is a periphyton bioreactor basin being designed as a bioreactor basin, which comprises periphyton, by which the content of contaminants, such as oil, organic matter or nutrients, in the saline water is reduced.

One aspect of the invention is that in general it is sufficient to achieve a considerable reduction of the contaminant content in saline water by using peripyhton, and larger plants are not necessarily required. Broadly, a facility according to the invention can consist of a series of gravity-flow basins for receiving and attenuating saline wastewater, separating and recovering solid or oily phases from the water and subsequently eliminating and biodegrading the remaining contaminants through periphyton-mediated biogeochemical and physical processes within shallow ponds (Periphyton Bioreactors). The Periphyton Bioreactor basins are designed to provide the appropriate conditions, in terms of residence time, hydraulic and flow characteristics, substrate conditions and sunlight exposure, to promote the production of attached-growth biofilms and facilitate the retention of contaminants such as oil and hydrocarbons, subsequently promulgating the necessary biodegradation processes. Inputs of electricity, chemicals and electro-mechanical processes are generally not required for the water treatment processes to operate, but may be augmented in order to enhance or accelerate the treatment process.

The invention can be applied to treat wastewaters with salinity greater than that of seawater (> 40,000 ppm TDS). The invention does not rely on the use of vegetation for contaminant removal within the Periphyton Bioreactor basins. However, halophytic (salt tolerant) and hydrophytic (water tolerant) vegetation can be added or allowed to develop in wastewaters with suitably low salinity and may provide some added benefits or enhance the process.

The main advantages of the proposed infrastructure facility shall be:
- Minimal use of external electrical power and therefore minimal production of equivalent CO₂ emissions;
- High treatment standard, with expected contaminant concentration at the end of the treatment process below values required for discharge to the environment or reuse;
- Robustness of the infrastructure facility, ensuring continuous treatment as per design capacity throughout its design life;
- Opportunity to produce valuable by-products from the treatment process and valuable products from the effluent reuse and/or disposal area;
- Protect and promote environmental sustainability.

According to the invention, periphyton consists of a complex assemblage of auto-trophic and heterotrophic microbial communities, including bacteria, algae, cyanobacteria and fungi growing within a mucopolysaccaride matrix along with associated aquatic invertebrates and detritus. Periphyton, also known as biofilm, typically grows attached to submerged surfaces in an aquatic and marine ecosystem. It can absorb and transform contaminants, removing them from the water column and limiting their movement through the environment.

In the invention, the infrastructure facility and associated treatment method preferably includes:
- (optional) one oil separation and solids settlement area for receiving the saline water and for separating solids and oil fractions from the saline water, if the concentration of contaminants (i.e. hydrocarbons, TSS) is above the periphyton bioreactor treatment capability. If separation/sedimentation process is not required, this facility will serve as a flow attenuation and water pressure equalization interface only;
- at least one surface flow bioreactor area containing periphyton as described above
- (optional) one or more independent or integrated effluent reuse and / or disposal areas supplied with effluent water from the bioreactor area that can be adjusted according to the effluent water properties and end-use demands.

### OIL SEPARATION AND/OR SOLIDS SETTLEMENT AREA

This area shall be designed to ensure that the water parameters at the outlet of the same are matching with the water design parameters required by the periphyton bioreactor downstream.

Based on the inlet water characteristics the proper oil separation and / or settlement technology shall be selected and implemented.

The invention gives preference to oil separation and solids settlement technologies based on retention time and gravity coalescence which can operate without external inputs of electricity or chemicals for the treatment process. As a consequence of the difference of density of the different phases (oil, water and solids), oil will migrate on the surface of the separation area forming a thin film that can be easily recovered while the solids will settle down at the bottom and the partially clarified water will pass through the system.

Any oil shall be recovered on a continuous basis from the surface of the oil separation area, flowing preferably by gravity to an oil storage tank or similar where it can then be further processed into a hydrocarbon product (e.g. crude oil).

The typical layout of this area can be formed by a combination of the following items:
- A hand-over interface from the supplier of the wastewater with metering facility (if required) and flow control system, and/or
- a series of water retaining basins (earthen, concrete or steel) interconnected by pipes with defined difference in levels to allow gravity flow and gravity separation of oil and solids, and/or
- several gravity-fed oil coalescence devices like gravity cyclones to enhance oil separation, and/or
- oil recovery devices like rotary drum / brush skimmers, oil press or similar, to recover the oil on the surface of the retention basins, and/or
- a distribution interface where a series of water level control devices will allow flow control capability and consistent water quality distribution to the downstream periphyton bioreactor cells, and/or

The exact sizing and process design of the components mentioned above shall be defined according, but not limited to, the following water characteristics:
- flow rate,
- oil concentration,
- viscosity and density of the oil and water,
- oil droplet size and distribution,
- solids size and distribution,
- chemical composition of the solids.

### PERIPHYTON BIOREACTOR AREA

This area shall be designed to complete the treatment process of the wastewater in order to ensure that the effluent will meet the targeted design parameters.

This area shall be located downstream of the distribution interface of the oil separation/settlement area.

The periphyton bioreactor area shall be designed as a single or a combination of shallow ponds with the following characteristics:
- Regular flat bottom surface or terraced as per hydraulic requirement of the water flow and site topography; and/or
- Earthen bund surrounding the ponds to provide 500mm or more of freeboard or to comply with local governing standards where applicable; and/or
- A sealing layer on the bottom of the pond and on the inner side of the surrounding bund, if required according to field conditions and environmental requirements. Sealing layer can be synthetic geomembrane material, geosynthetic clay liner, concrete or a mineral sealing layer using locally sourced compacted soil material (preferred), depending on local regulatory requirements; and/or

- A substrate layer for the growth and establishment of the periphyton community and vegetation and/or artificial filer media (if included) on top of the sealing layer. The substrate layer is preferably composed of existing top-soil material, excavated, screened top-soil or sub-soil material, crushed aggregates or sand and amendments from a nutrient-rich organic material such as hay, humus, mud, harvested biomass or treated hydrocarbon contaminated soil or sludge. Thickness of the layer shall be defined according to the characteristics of the selected substrate material; and/or
- A shallow layer of water flowing over the surface of the substrate from one end of the pond to the other via gravity, passing amongst the periphyton mats and biofilms, and becoming cleaned in the process; and/or
- A series of inlet and outlet piping combined with appropriate water level control structures to manage the water flow and water level inside the pond; and/or
- If the scenario with a combination of ponds is selected, the different ponds shall be carefully designed to ensure the proper water flow. Ponds can be designed in series or in parallel and they should be connected through piping or intermediate channels for optimal water re-distribution and regulation.

The water shall flow through the periphyton bioreactor with a "sheet-flow" with a depth of 0 to 500mm throughout each pond in order to obtain a film of water that spreads uniformly across the substrate layer surface and coming into contact with the periphyton community.

While flowing through the pond, the water shall be subjected to one or multiple treatment processes acting to clean the water:

### Physical treatment:

- Oil separation by retention time: the smallest fraction of oil droplet that does not settle in the oil retention/solid settlement area can separate and float to the water surface in the periphyton bioreactor area due to the long retention time at a very shallow depth. Floating oil droplets then become stuck to the surface of periphyton mats, substrate layer plants (if present), artificially installed media (if present) and/or other solid surfaces in the bioreactor. The oil droplets are therefore trapped and subsequently bio-degraded by further biological processes.
- Oil coalescence: while crossing the pond with a sheet flow, the water is subjected to mild turbulences generated by the collision with the surfaces of periphyton mats, substrate layer and other solid surfaces (such as vegetation or artificially installed filter media, if installed), promoting coalescence of the oil droplets. Coalescence of the oil particles leads to formation of larger oil droplets, which are then more easily removed from the water by becoming stuck to the surface of periphyton mats, substrate layer plants, artificially installed media and/or other solid surfaces in the bioreactor. The oil droplets are therefore trapped and subsequently bio-degraded by further biological processes.
- Physisorption: oil droplets are subjected to dispersive adhesion process and are adsorbed onto soil particles and biological materials. The oil droplets are therefore trapped and subsequently bio-degraded by further biological processes.
- Fine suspended solid particles with a higher density than water are removed from the water via settling processes and/or becoming entrapped in sticky biofilms growing on the surface of substrate layer, microbial mats, plants, artificially installed media and/or other solid surfaces in the Bioreactor.

### Biological treatment:

- Biological treatment processes are enacted by the microbial communities that form a part of the periphyton assemblages that may or may not be supported by vegetation and / or artificially installed filter media. They may be naturally occurring, ubiquitous and/or endogenous micro-organisms already present in the environment and which thrive once the proper habitat is established in the bioreactor. However, the method includes the ability to inoculate the bioreactor with selected microbial strains and to incorporate selected vegetation and/or other artificially installed filter media onto the surface of the substrate layer (within the water column) to enhance the establishment of the required biomass for water treatment.
   Furthermore, particular micro-organisms, plant vegetation and/or artificially installed substrates may be preferred and therefore selectively inoculated in order to obtain a suitable biomass growth for production of useful and valuable products, but not limited, to:
   o carbon sequestration;
   o bio-fuel;
   o bio-gas;
   o pigments for food, cosmetic, nutraceutical and pharmaceutical industries;
   o fertilizers including compost;
   o animal feeds.

### EFFLUENT REUSE AND/OR DISPOSAL AREA

This area shall be designed to ensure the maximum utilization of the resources available in order to generate a viable economical model for the entire integrated infrastructure facility. Alternatively, it may be intended to provide a low-cost and environmentally sound means of treated water disposal.

This area shall be located downstream of the periphyton bioreactor area and shall be adjusted according, but not limited, to:
- treated water properties,
- salinity of the treated water,
- production of materials or products which form a useful input to enhance the upstream treatment processes,
- possible synergies with other investors or local industries,
- environmental regulation and standards,
- socio-economic scenario of the infrastructure facility location.

The effluent reuse and / or disposal area may consist of one or more of the following:
- a saline area for the evaporation of water and the concentration/precipitation of salt,
- a basin area for evaporation only for final disposal of water,
- a reception basin/tank or similar facility for pumping or feeding by gravity to an alternative re-use not limited to the ones listed below:
   o a desalination facility using reverse / forward osmosis, multistage flash distillation, electrodialysis reversal, solar desalination via evaporation-condensation or other treatment process to lower the salt concentration in the water in order to supply water to end-uses requiring low-salinity water (e.g. agriculture, industry, aquifer recharge, discharge to freshwater ecosystems), and/or
   o a dedicated agricultural area for cultivation of salt-tolerant, halophytic crops (e.g. Mangroves, Salicornia, Conocarpus, Jojoba, Cotton, Castor, Jatropha, Eucalyptus, Tamarix), and/or
   o an open discharge (municipal drainage infrastructures, natural waterways, estuary, salt marsh, sea or similar environmental discharge area), if local discharge standards allow, and/or
   o a created salt-marsh, estuarine or marine ecosystem area to support wildlife habitat and enhance local biodiversity, and/or
   o a shallow/deep injection well, and/or
   o an Educational/Recreational Facility such as an Ecological Park, and/or
   o an Entertainment Facility such as a visitor center, golf course or other area that provides a social recreational function,
- a modular basin area (having a plurality of utility basins if required) that may be utilized for one or a combination of the following options:
   o shrimp farming, and/or
   o fish farming, and/or
   o algae farming.

According to a preferred embodiment of the invention, the periphyton bioreactor basin comprises a bottom base low permeability layer being designed to retain the water. Moreover, this low permeability layer may comprise a layer of compacted soil material, such as clay or other fine grained material, or a geomembrane material, or a geosynthetic clay layer, or concrete, or a plastic containment.

According to the invention, a uniformly levelled benthic surface for each periphyton bioreactor basin is provided, over which the water flows. The uniformly levelled benthic layer may comprise a soil layer, a sand layer, a gravel layer, aggregate derived from crushed concrete and/or demolition waste, previously oil contaminated soil material, a plastic geomembrane layer, a plastic geofabric layer or any combination thereof. At least one layer may provide a sufficiently large surface for growing mats or films of the periphyton community.

According to another further development of the invention, inlet means for uniformly distributing an inflow of the saline water across the width of the periphyton bioreactor basin is provided. Corresponding outlet means to facilitate uniform exiting of the water across the width of the periphyton bioreactor can be arranged. By the inlet means in the shallow periphyton bioreactor basin, in which a water level of several centimeters up to a water level of 0.5 meter is created, a defined uniform flow of the saline water across the periphyton bioreactor basin is ensured. The inlet means may comprise of regulating the amount of saline water entering into the at least one periphyton bioreactor basin. The conveyance structures for the water can comprise open channels, pipes or a combination thereof. The inlet means may comprise of a water conveyance structure with multiple points across the width of the basin for introducing the saline water to be treated into the periphyton bioreactor basin. Moreover, an initial basin or channel for an inflow attenuation and equalization can be provided.

According to another embodiment of the invention, it is preferred that there is an adjustment device for regulating the water level inside the periphyton bioreactor basin for providing a shallow water depth within the periphyton bioreactor basin. The adjustment device can comprise one or more valves for regulating the inflow. Furthermore, electronic control means including sensors for measuring the level inside the basin and/or an inflow rate as well as drives for automatically operating the valves for inlet means and/or outlet means can be incorporated.

The periphyton comprises an assemblage of salt tolerant micro-organisms grown as mats and attached growth biofilms within a water column of the at least one periphyton bioreactor basin. The periphyton may be arranged on any suitable element within the water basin.

In another embodiment of the invention, it may be advantageous under certain circumstances to include periphyton bioreactor basin carrier elements for supporting the growth of periphyton. These carrier elements may comprise vegetation, harvested plant material, organic matter, rods, plates, meshes and/or any other structural members creating a large and appropriate surface for periphyton growth.

In general, a single bioreactor basin may be sufficient for a particular use. Depending on the quantity of saline water to be treated, several periphyton bioreactor basins are provided, wherein the periphyton bioreactor basins are arranged and connected in series and/or in parallel. In a parallel arrangement, the flow of saline water can be split proportionally between the parallel basins.

According to the invention, two transverse channels are provided, wherein each transverse channel is provided within the periphyton bioreactor basin, the transverse channel being deeper than the main part of the periphyton bioreactor basin, and the channel is substantially spanning the full width of the periphyton bioreactor basin. Such a transverse channel is directed perpendicular to the direction of flow and enhances a uniform and hydraulically efficient flow through the basin.

According to the invention, a transverse channel is arranged in an initial part of the periphyton bioreactor basin nearby inlet means and in a final part of the same basin nearby outlet means. Especially at the initial part or the final part of the periphyton bioreactor basin a uniform distribution and a significant attenuation of the flow is particularly efficient. At the final part a uniform collecting of the outflow across the width of an outlet end of each periphyton bioreactor basin can be achieved by arranging a deeper channel nearby the outlet means.

In general, the at least one periphyton bioreactor basin can be provided only with periphyton for biologically removing oil, hydrocarbons or other contaminants from the saline water. Contaminant removal can be enhanced according to a further development of the invention in that in at least one periphyton bioreactor basin salt tolerant halophyte vegetation is provided. The halophyte vegetation may include mangrove trees, varieties of salt marsh plants, including members of the Juncaceae, Spartina, Salicornioideae, Zosteraceae, Chenopodiaceae, Aizoaceae, Poaceae and/or Cyper-aceae families, amongst others.

According to another embodiment of the invention, the cleaning effect of the periphyton bioreactor is improved in that at least one solid separation means for separating solids from the water are provided, in particular at least one settling basin. Preferably, the at least one soil separation means is arranged in front of the periphyton bioreactor basin or in an initial part thereof.

According to a further development of the invention, at least one oil separation means for separating oil from the saline water is provided before the periphyton bioreactor, in particular a device causing gravity coalescence and flotation of the oil droplets and/or skimming means for removing floating oil from the surface of the saline water. By the skimming means an oil film from the surface can be sucked and skimmed off.

Furthermore, the oil separating means may comprise a channel with a bottom bathym-etry and flow velocity designed to promote coalescence and flotation of oil droplets. In particular, such an oil separating means can be followed by a skimming means for removing the oil droplets or oil film from the surface of the water.

Further, the artificially installed carrier elements or substrates within parts of the water column of the treatment basin can support the growth of periphyton and promote the trapping of oil solids. These artificially installed substrates may comprise plant material and/or stands and/or composed of plastic.

The use of the facility can be further improved in that following the at least one periphyton bioreactor basin, at least one evaporation pond for passively disposing the treated water is provided. By the evaporation pond, the amount of water can be significantly reduced by evaporation. Alternatively or additionally, disposal means for discharging the remaining water to a saline water body, such as the ocean or a lake. Moreover, disposal means can be provided including conveying means for conveying the treated water towards the ground water, either by pumping means or via gravity. The conveying means can convey the treated water towards ground water via at least one soil infiltration soakage area and/or at least one managed aquifer recharge system and/or at least one ground water injection valve.

Furthermore, the remaining water exiting the periphyton bioreactor basin may be reused for productive purposes. Reuse means can comprise an evaporative solar salt production facility, a desalination facility to remove salt from the water, irrigation of halophytic agriculture, forestry- and/or horticulture, an aquaculture system and/or an algae farm. By reusing the treated water, a creation, enhancement or restoration of salt marsh environment for enhancing values of biodiversity, education and recreation and/or carbon sequestration via irrigation of salt tolerant vegetation can be achieved. Additionally, the biomass created by the periphyton may be harvested by respective harvesting means. By the harvesting means the grown biomass is removed out of the saline water continuously or preferably at respective time intervals. The biomass can be used for example for producing biogas.

The inventive method is characterized in that the at least one periphyton bioreactor basin is designed as a bioreactor basin, which comprises periphyton, wherein the content of contaminants and oil in the saline water is reduced by the periphyton. The method is carried out with the inventive facility, as described above, and is further defined in claim 11. With this method, the described advantages can be achieved.

The invention is further described in connection with preferred embodiments being shown in the enclosed drawings. The drawings are showing in
- fig. 1: a schematic plan view of a part of an inventive facility;
- fig. 2: a further schematic plan view of a part of an inventive facility;
- fig. 3: a cross section of the part of an inventive facility of fig. 2;
- fig. 4: a plan view on oil separation means for an inventive facility; and
- fig. 5: a schematic cross section of the oil separation means of fig. 4.

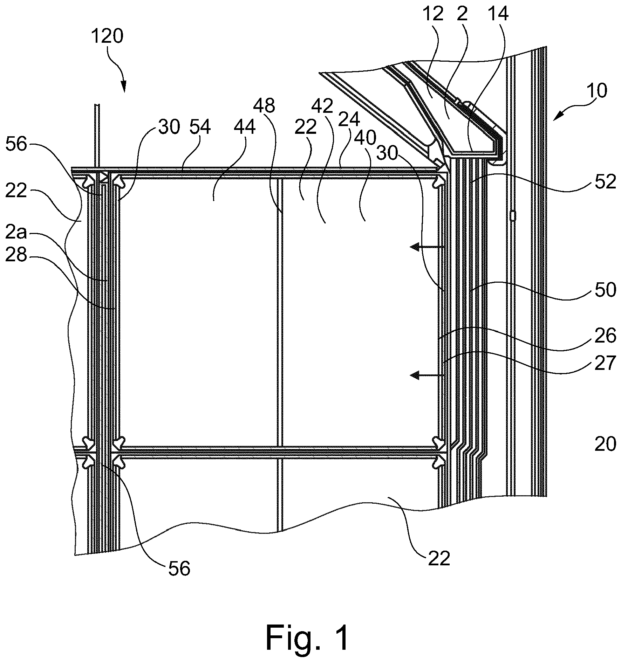

A part of a facility 10 for the treatment of saline water 2 is schematically shown in fig. 1. The facility 10 is constructed on and into the ground at an appropriate location, where the saline water 2 can flow by gravity. The saline water 2 which could be produced water from an oil field, is guided to the facility 10 by a feeding duct! channel 12. From centralized weir gates 14 the water 2 from the feeding duct! channel 12 flows into inlet distribution channels 52 of a distribution system 50. At least one inlet distribution channel 52 is provided for the first constructed periphyton bioreactor basins 22 of a constructed system. The facility 10 comprises a plurality of periphyton bioreactor basins 22 being arranged in parallel and/or in series.

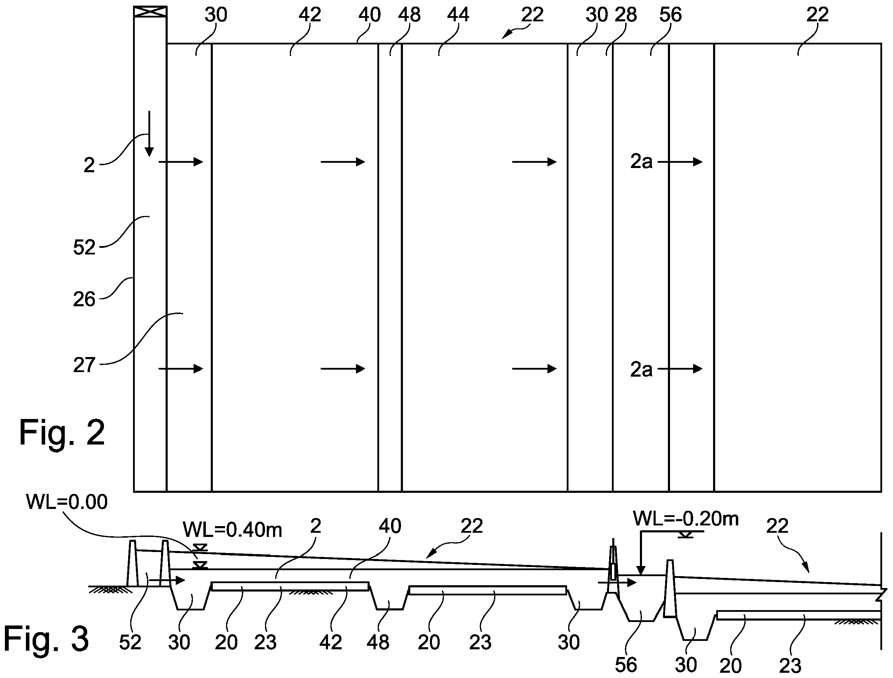

Each periphyton bioreactor basin 22 has a substantially rectangular shape with longitudinal sides 24 being parallel to the direction of flow of water 2 and broad sides 26 being transverse or orthogonal to the longitudinal sides 24. At the bottom of each periphyton bioreactor basin 22 at least one substrate layer 23 with periphyton 20 is arranged. From a particular inlet channel 52, the saline water 2 flows via a plurality of inlet openings close to the inlet portion 27 of the periphyton bioreactor basin 22. At an outlet portion 28 an interchange channel 56 along the broad side of the periphyton bioreactor basin 22 can be used to collect the water 2 flowing out of the periphyton bioreactor basins 22. The design and the operation of one particular periphyton bioreactor basins 22 according to the invention is further shown in the figures 2 and 3. From the inlet distribution channel 52 the water 2 flows uniformly via several inlet openings into an initial calming zone with a transverse channel 30 of the periphyton bioreactor basin 22. From the calming zone the water 2 flows into a treatment zone 40, which is provided with periphyton 20 in and along a substrate layer 23. The substrate layer 23 is adapted to support growth of periphyton 20 being able to reduce the content of oil in the water 2.

As is shown in the cross section according to fig. 3, the calming zone is designed as an elongated transverse channel 30 along the broad side 26 with a greater depth than the foregoing inlet distribution channel 52 and the adjacent area of the treatment zone 40. By this design of the calming zone with a transverse channel 30, the velocity of the flow of water 2 is reduced. Furthermore, the water 2 is enabled to flow in a transverse direction along the broad side 26 leading to a certain intermixing of the water 2 within the calming zone. Moreover, the stream of water 2 flowing into the periphyton bioreactor basin 22 is equalized achieving a uniform distribution of the flow across the full breadth of the periphyton bioreactor basin 22 and more gentle velocity in contact of the substrate layer 23 with the periphyton.

According to another aspect of the invention, the treatment zone 40 can be divided in at least one upstream terrace 42 and at least one downstream terrace 44 being separated by a channel-like intermediate calming zone 48. It has to be mentioned that the ground level of the downstream terrace 44 can be at the same elevation or at a lower elevation than the ground level of the upstream terrace 42, wherein a stepped arrangement is established, depending on the hydraulic requirements of the application. By this stepped arrangement, the hydrodynamics of water 2 through the treatment zone 40 is further enhanced.

Furthermore, the ground level of the intermediate calming zone 48 between the upstream terrace 42 and the downstream terrace 44 is deeper than the ground level of both terraces 42, 44. Due to this channel-like deepening, again an additional calming and intermixing of the water 2 to be treated between the upstream terrace 42 and the downstream terrace 44 is achieved.

At the outlet portion 28 of the first periphyton bioreactor basin 22 an additional calming zone 30 is provided. This calming zone 30 at the outlet portion 28 is deeper than the ground level of the adjacent upstream terrace 44. This outlet calming zone with another transverse channel 30 leads to a similar effect regarding the calming and equalizing of the flow of water 2 as the first initial calming zone at the inlet portion 27. In a serial arrangement of periphyton bioreactor basins 22, the outflow of a first periphyton bioreactor basin 22 can be introduced into a following periphyton bioreactor basin 22, as is schematically shown in the figures 1 to 3.

Between these adjacent periphyton bioreactor basins 22 an interchange channel 56 can be arranged. The interchange channel 56 is directed along the outlet sides 26 of one or more parallel periphyton bioreactor basins 22 adjacent to the outlet portion 28, thus allowing an intermixing of partially treated water 2a from several parallel periphyton bioreactor basins 22 before introducing the partially treated water 2a being equalized in quality into subsequent periphyton bioreactor basins 22 with a calming zone.

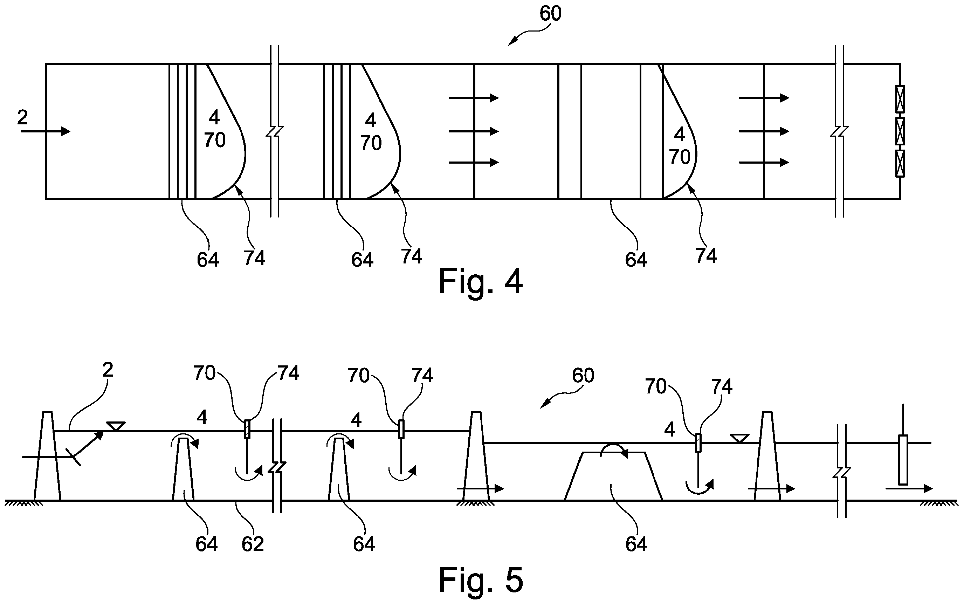

In the figures 4 and 5 an oil skimming channel 60 is shown, which could be part of the feeding duct 12 of the plant 10 being described in connection with figures 1 to 3 for wastewaters containing significant quantities of oil. In particular, the oil skimming channel 60 can be arranged in an inlet area as part of the feeding duct 12 before the distribution system 50 of the periphyton bioreactor basins 22.

The oil skimming channel 60 comprises a bottom 62 with water levels that allow for a flow with low velocities on which one or more underwater bunds 64 are provided. The underwater bunds 64 locally reduce the cross section of the oil skimming channel 60, causing a sudden increase in the flow velocity, which itself causes a local decrease in the water surface elevation. Furthermore, in the surface area of the water 2 eddies are created within the water 2 due to the sudden reduction of the flow velocities bringing the oil droplets together. The sudden decrease in velocity leads to a collision of oil droplets in the water 2. Due to the collision of the oil droplets the water surface tension of the small oil droplets is broken and the droplets coalesce together to form an oil blanket 4 immediately after the underwater bund 64. The formation of an oil blanket 4 is further enhanced by the arrangement of a baffle 74 floating at the surface of the water 2 which keeps the oil blanket 4 stationary supporting the coalescing of the oil droplets through the collision and eddy action and facilitating the removal of the oil blanket by way of skimming. At the baffle 74, skimming means 70 can be arranged for skimming off the oil blanket 4 from the surface of the water 2.

By the arrangement of additional following underwater bunds 64, this cleaning and skimming can be repeated. By this oil skimming channel 60, a desired pre-treatment of the water 2 with a significant reduction of the oil content can be achieved, in particular before the water 2 to be treated flows into periphyton bioreactor basins 22 with the periphyton.

## Claims

1. Facility for treatment of saline water (2) having a salinity greater than that of seawater, meaning greater than 40,000 ppm TDS, and containing oil and/or other contaminants, comprising
a feeding duct (12) for supplying the saline water (2) and
at least one treatment basin integrated in a natural or artificial topography,
**characterized in that**
the at least one treatment basin is a periphyton bioreactor basin (22) being designed as a bioreactor basin, which comprises periphyton (20),
**in that** the periphyton (20) comprises an assemblage of salt tolerant periphyton grown as mats and attached growth biofilms within a water column of the at least one periphyton bioreactor basin (22),
**in that** the periphyton bioreactor basin (22) comprising a treatment zone (40) which is provided with a substrate layer (23) adapted to support growth of periphyton and which has a uniformly levelled benthic surface and being formed as a shallow pond, so that the water may flow with a sheet-flow with a depth of 0-500 mm throughout the periphyton bioreactor basin (22) in order to obtain a film of water that spreads uniformly across the benthic layer surface,
**in that** the periphyton bioreactor basin (22) is designed to provide the appropriate conditions, in terms of residence time, hydraulic and flow characteristics, substrate conditions and sunlight exposure, to promote the production of attached-growth biofilms and facilitate the retention of contaminants such as oil and hydrocarbons, subsequentially promulgating the necessary biodegradation processes, so that the periphyton bioreactor basin (22) is adapted for physically and biogeo-chemically eliminating and biodegrading contaminants and is thus adapted for treating the saline water (2), by which the content of oil and/or other contaminants in the saline water (2) is reduced,
**in that** a calming zone (30) is arranged in an initial part of the periphyton bioreactor basin (22) nearby inlet means (50), said calming zone (30) being designed as a transverse channel (30) which substantially spans the full width of the periphyton bioreactor basin (22) and is deeper than the main part of the periphyton bioreactor basin (22), and in particular deeper than the adjacent area of the treatment zone (40), wherein the water flows from the calming zone (30) into said adjacent area of the treatment zone (40), and
**in that** an additional calming zone (30) is arranged in a final part of the periphyton bioreactor basin (22) nearby outlet means (50), said additional calming zone (30) being designed as a transverse channel (30) which substantially spans the full width of the periphyton bioreactor basin (22) and is deeper than the main part of the periphyton bioreactor basin (22), and in particular deeper than the adjacent area of the treatment zone (40), wherein the water flows from said adjacent area of the treatment zone (40) into the additional calming zone (30).

2. Facility according to claim 1,
**characterized in that**
the periphyton bioreactor basin (22) comprises a sealing layer (23a) being designed to retain the water within the periphyton bioreactor basin (22),

3. Facility according to claim 1 or 2,
**characterized in that**
inlet means (50) for uniformly distributing an inflow of the saline water (2) across the width of the periphyton bioreactor basin (22) is provided.

4. Facility according to any one of the claims 1 to 3,
**characterized in that**
an adjustment device for adjusting a water level inside the periphyton bioreactor basin (22) for providing a shallow water depth within the periphyton bioreactor basin (22) is provided.

5. Facility according to any one of the claims 1 to 4,
**characterized in that**
within the periphyton bioreactor basin (22) carrier elements for carrying the periphyton (20) are provided.

6. Facility according to any one of the claims 1 to 5,
**characterized in that**
several periphyton bioreactor basins (22) are provided, wherein the periphyton bioreactor basins (22) are arranged and connected in series and/or in parallel.

7. Facility according to any one of the claims 1 to 6,
**characterized in that**
in at least one periphyton bioreactor basin (22) salt tolerant halophyte vegetation is provided.

8. Facility according to any one of the claims 1 to 7,
**characterized in that**
at least one solid separation means for separating solids from the water (2) are provided, in particular at least one settling basin.

9. Facility according to anyone of the claims 1 to 8,
**characterized in that**
at least one oil separation means for separating oil from the water (2) is provided, in particular a device causing gravity coalescence and floatation of the oil droplets and/or skimming means (70) for removing floating oil from the surface of the saline water (2).

10. Facility according to any one of the claims 1 to 9,
**characterized in that**
following the at least one periphyton bioreactor basin (22) at least one evaporation pond for disposing the treated water is provided.

11. Method for treatment of saline water (2) having a salinity greater than that of seawater, meaning greater than 40,000 ppm ppm TDS, and containing oil and/or other contaminants, by means of a facility (10) according to any one of the claims 1 to 10, including the following steps:
supplying the saline water (2) by a feeding duct to at least one treatment basin integrated in a natural or artificial topography, and
biologically treating the saline water (2) in the treatment basin, while the saline water (2) flows through the treatment basin from an inlet to an outlet,
**characterized in that**
the at least one treatment basin is a periphyton bioreactor basin (22) being designed as a bioreactor basin, which comprises periphyton (20), wherein the content of oil and/or other contaminants in the saline water (2) is reduced by the periphyton (20),
the periphyton (20) comprises an assemblage of salt tolerant periphyton grown as mats and attached growth biofilms within a water column of the at least one periphyton bioreactor basin (22), and
the physically and biologically treating of the saline water (2) is effected by biodegrading the contaminants through periphyton-mediated biogeochemical and physical processes within the periphyton bioreactor basin (22) formed as a shallow pond enabling sunlight exposure to promote the production of attached-growth biofilms within the water column and facilitate the retention of contaminants such as oil and hydrocarbons from the saline water (2).

## Patentansprüche

1. Anlage zum Behandeln von Salzwasser (2) mit einem Salzgehalt größer als der von Meerwasser, was mehr als 40.000 ppm TDS bedeutet, und welches Öl und/oder andere Verunreinigungen umfasst, mit
einer Zuführung (12) zum Zuführen von Salzwasser (2) und
mindestens einem in eine natürliche oder künstliche Topographie eingefügten Behandlungsbecken,
**dadurch gekennzeichnet, dass**
das mindestens eine Behandlungsbecken ein Periphytonbioreaktorbecken (22) ist, welches als ein Bioreaktorbecken ausgelegt ist, welches Periphyton (20) aufweist,
dass das Periphyton eine Anordnung von salzverträglichen, als Matten gewachsenes Periphyton und zugefügten Entwicklungsbiofilmen in einer Wassersäule des mindestens einen Periphytonbioreaktorbeckens (22) aufweist,
dass das Periphytonbioreaktorbecken (22) eine Behandlungszone (40) aufweist, welche mit einer Substratschicht (23) versehen ist, die zum Unterstützen von Wachstum des Periphytons ausgebildet ist und welche eine gleichmäßig ausgeglichene benthische Oberfläche aufweist und welche als flaches Staubecken ausgebildet ist, so dass das Wasser mit einem Schichtströmung mit einer Tiefe von 0 - 500 mm durch das Periphytonbioreaktorbecken (22) fließen kann, um einen Film aus Wasser zu erhalten, der sich gleichmäßig über die benthische Schichtoberfläche verteilt,
dass das Periphytonbioreaktorbecken (22) zum Bilden der geeigneten Bedingungen in Bezug auf Widerstandszeit, Hydraulik- und Fließeigenschaften, Substratzuständen und Sonneneinstrahlung, zum Fördern der Entwicklung von zugefügten Entwicklungsbiofilmen und zum Vereinfachen des Zurückbehaltens von Verunreinigungen, wie Öl oder Kohlenwasserstoffe, und anschließendem Verbreiten des notwendigen Bioabbauprozesses ausgelegt ist, so dass das Periphytonbioreaktorbecken (22) zum physikalischen und biogeochemischen Beseitigen und biologischen Zersetzen von Verunreinigungen eingerichtet ist und somit zum Behandeln des Salzwassers (2) eingerichtet ist, wodurch der Anteil an Öl und/oder anderen Verunreinigungen in dem Salzwasser reduziert wird,
dass eine Beruhigungszone (30) in einem ersten Teil des Periphytonbioreaktorbeckens (22) nahe einer Einlasseinrichtung (50) angeordnet ist, wobei die Beruhigungszone (30) als ein Querkanal (30) ausgelegt ist, der im Wesentlichen die gesamte Breite des Periphytonbioreaktorbeckens (22) umfasst und tiefer als der Hauptteil des Periphytonbioreaktorbeckens (22) ist und insbesondere tiefer als der benachbarte Bereich der Behandlungszone (40), wobei das Wasser von der Beruhigungszone (30) in den benachbarten Bereich der Behandlungszone (40) fließt, und
dass eine zusätzliche Beruhigungszone (30) in einem letzten Teil des Periphytonbioreaktorbeckens (22) nahe der Auslasseinrichtung (50) angeordnet ist, wobei die zusätzliche Beruhigungszone (30) als ein Querkanal (30) ausgestaltet ist, der im Wesentlichen die gesamte Breite des Periphytonbioreaktorbeckens (22) umfasst und tiefer als der Hauptteil des Periphytonbioreaktorbeckens (22) ist und insbesondere tiefer als der benachbarte Bereich der Behandlungszone (40) ist, wobei das Wasser von dem benachbarten Bereich der Behandlungszone (40) in die zusätzliche Beruhigungszone (30) fließt.

2. Anlage nach Anspruch 1,
**dadurch gekennzeichnet, dass**
das Periphytonbioreaktorbecken (22) eine Dichtungsschicht (23a) aufweist, die zum Speichern des Wassers in dem Periphytonbioreaktorbecken (22) ausgelegt ist.

3. Anlage nach Anspruch 1 oder 2,
**dadurch gekennzeichnet, dass**
eine Einlasseinrichtung (50) zum gleichmäßigen Verteilen eines Zuflusses des Salzwassers (2) über die Breite des Periphytonbioreaktorbeckens (22) vorgesehen ist.

4. Anlage nach einem der Ansprüche 1 bis 3,
**dadurch gekennzeichnet, dass**
eine Verstelleinrichtung zum Einstellen eines Wasserstandes in dem Periphytonbioreaktorbecken (22) vorgesehen ist zum Bilden einer flachen Wassertiefe in dem Periphytonbioreaktorbecken (22).

5. Anlage nach einem der Ansprüche 1 bis 4,
**dadurch gekennzeichnet, dass**
in dem Periphytonbioreaktorbecken (22) Trägerelemente zum Tragen des Periphytons (20) vorgesehen sind.

6. Anlage nach einem der Ansprüche 1 bis 5,
**dadurch gekennzeichnet, dass**
mehrere Periphytonbioreaktorbecken (22) vorgesehen sind, wobei die Periphytonbioreaktorbecken (22) in Serie und/oder parallel angeordnet und verbunden sind.

7. Anlage nach einem der Ansprüche 1 bis 6,
**dadurch gekennzeichnet, dass**
in mindestens einem Periphytonbioreaktorbecken (22) salzverträgliche Halophyt-Vegetation vorgesehen ist.

8. Anlage nach einem der Ansprüche 1 bis 7,
**dadurch gekennzeichnet, dass**
mindestens eine Feststofftrenneinrichtung zum Trennen von Feststoffen von dem Wasser (2) vorgesehen ist, insbesondere mindestens ein Absetzbecken.

9. Anlage nach einem der Ansprüche 1 bis 8,
**dadurch gekennzeichnet, dass**
mindestens eine Öltrenneinrichtung zum Trennen von Öl von dem Wasser (2) vorgesehen ist, insbesondere eine Einrichtung, die Gravitations-Koaleszenz und Auftrieb der Öltröpfchen verursacht und/oder eine Abschöpfeinrichtung (70) zum Entfernen von schwimmendem Öl von der Oberfläche des Salzwassers (2).

10. Anlage nach einem der Ansprüche 1 bis 9,
**dadurch gekennzeichnet, dass**
nach dem mindestens einen Periphytonbioreaktorbecken (22) mindestens ein Verdunstungsbecken zum Beseitigen des behandelten Wassers vorgesehen ist.

11. Verfahren zum Behandeln von Salzwasser (2) mit einem Salzgehalt größer als der von Meerwasser, was mehr als 40.000 ppm ppm TDS bedeutet, und welches Öl und/oder andere Verunreinigungen enthält, mittels einer Anlage (10) nach einem der Ansprüche 1 bis 10 mit den folgenden Schritten:
Zuführen von Salzwasser (2) mittels einer Zuführung zu mindestens einem in eine natürliche oder künstliche Topographie eingefügten Behandlungsbecken, und
biologisches Behandeln des Salzwassers (2) in dem Behandlungsbecken, während das Salzwasser (2) durch das Behandlungsbecken von einem Einlass zu einem Auslass fließt,
**dadurch gekennzeichnet, dass**
das mindestens eine Behandlungsbecken ein Periphytonbioreaktorbecken (22) ist, welches als Bioreaktorbecken ausgelegt ist, welches Periphyton (20) aufweist, wobei der Anteil an Öl und/oder anderen Verunreinigungen in dem Salzwasser (2) durch das Periphyton (20) reduziert wird,
das Periphyton (20) eine Anordnung von salzverträglichen, als Matten gewachsenem Periphyton und zugefügten Entwicklungsbiofilmen in einer Wassersäule des mindestens einen Periphytonbioreaktorbeckens (22) aufweist, und
das physikalische und biologische Behandeln des Salzwassers (2) mittels biologischen Zersetzen der Verschmutzungen durch von Periphyton herbeigeführten biogeochemischen und physikalischen Prozessen in dem Periphytonbioreaktorbecken (22) bewirkt wird, das als ein flaches Staubecken ausgebildet ist, wodurch Sonneneinstrahlung ermöglicht wird zum Fördern der Entwicklung von zugefügten Entwicklungsbiofilmen in der Wassersäule und zum Vereinfachen des Zurückbehaltens von Verschmutzungen wie Öl oder Kohlenwasserstoffen aus dem Salzwasser (2) .

## Revendications

1. Installation de traitement d'eau saline (2) ayant une salinité supérieure à celle de l'eau de mer, à savoir un TDS supérieur à 40 000 ppm, et contenant du pétrole et/ou d'autres contaminants, comprenant
une canalisation d'alimentation (12) destinée à alimenter l'eau saline (2) et
au moins un bassin de traitement intégré dans une topographie naturelle ou artificielle,
**caractérisée en ce que**
l'au moins un bassin de traitement est un bassin bioréacteur de périphyton (22) qui est conçu en tant que bassin bioréacteur, qui comprend du périphyton (20),
**en ce que** le périphyton (20) comprend un assemblage de périphyton tolérant au sel obtenu par croissance en tant que mats et fixé à un biofilm de croissance à l'intérieur d'une colonne d'eau de l'au moins un bassin bioréacteur de périphyton (22),
**en ce que** le bassin bioréacteur de périphyton (22) comprend une zone de traitement (40) qui est pourvue d'une couche de substrat (23) apte à supporter une croissance de périphyton et qui comporte une surface benthique de niveau uniforme et qui est formée en tant qu'étang peu profond, de sorte que l'eau puisse s'écouler avec un écoulement laminaire sur une profondeur de 0 à 500 mm d'un bout à l'autre du bassin bioréacteur de périphyton (22) afin d'obtenir un film d'eau qui s'étale uniformément sur la surface de couche benthique,
**en ce que** le bassin bioréacteur de périphyton (22) est conçu pour fournir les conditions appropriées, en termes de caractéristiques de temps de résidence, hydrauliques et d'écoulement, de conditions de substrat et d'exposition à la lumière solaire, pour favoriser la production de biofilms de croissance fixés et pour faciliter la rétention de contaminants tels que du pétrole et des hydrocarbures, favorisant ultérieurement les processus de biodégradation nécessaires, de sorte que le bassin bioréacteur de périphyton (22) soit apte à une élimination et à une biodégradation physiques et biogéochimiques de contaminants et soit ainsi apte à traiter l'eau saline (2), ce par quoi la teneur en pétrole et/ou en d'autres contaminants de l'eau saline (2) est réduite,
**en ce qu'**une zone de tranquillisation (30) est disposée dans une partie initiale du bassin bioréacteur de périphyton (22) au voisinage d'un moyen d'entrée (50), ladite zone de tranquillisation (30) étant conçue en tant que canal transversal (30) qui couvre sensiblement toute la largeur du bassin bioréacteur de périphyton (22) et qui est plus profond que la partie principale du bassin bioréacteur de périphyton (22), et en particulier plus profond que la région adjacente de la zone de traitement (40), dans laquelle l'eau s'écoule de la zone de tranquillisation (30) dans ladite région adjacente de la zone de traitement (40), et
**en ce qu'**une zone de tranquillisation supplémentaire (30) est disposée dans une partie finale du bassin bioréacteur de périphyton (22) au voisinage d'un moyen de sortie (50), ladite zone de tranquillisation supplémentaire (30) étant conçue en tant que canal transversal (30) qui s'étend sensiblement sur toute la largeur du bassin bioréacteur de périphyton (22) et qui est plus profond que la partie principale du bassin bioréacteur de périphyton (22), et en particulier plus profond que la région adjacente de la zone de traitement (40), dans laquelle l'eau s'écoule de ladite région adjacente de la zone de traitement (40) dans la zone de tranquillisation supplémentaire (30).

2. Installation selon la revendication 1,
**caractérisée en ce que**
le bassin bioréacteur de périphyton (22) comprend une couche d'étanchéité (23a) qui est conçue pour retenir l'eau à l'intérieur du bassin bioréacteur de périphyton (22).

3. Installation selon la revendication 1 ou la revendication 2,
**caractérisée en ce que**
un moyen d'entrée (50) destiné à distribuer uniformément un écoulement en entrée de l'eau saline (2) sur la largeur du bassin bioréacteur de périphyton (22) est prévu.

4. Installation selon l'une quelconque des revendications 1 à 3,
**caractérisée en ce que**
un dispositif de réglage destiné à régler un niveau d'eau à l'intérieur du bassin bioréacteur de périphyton (22) de façon à obtenir une profondeur d'eau peu profonde à l'intérieur du bassin bioréacteur de périphyton (22) est prévu.

5. Installation selon l'une quelconque des revendications 1 à 4,
**caractérisée en ce que**
à l'intérieur du bassin bioréacteur de périphyton (22), des éléments de support destinés à supporter le périphyton (20) sont prévus.

6. Installation selon l'une quelconque des revendications 1 à 5,
**caractérisée en ce que**
plusieurs bassins bioréacteurs de périphyton (22) sont prévus, dans laquelle les bassins bioréacteurs de périphyton (22) sont disposés et reliés en série et/ou en parallèle.

7. Installation selon l'une quelconque des revendications 1 à 6,
**caractérisée en ce que**
dans au moins un bassin bioréacteur de périphyton (22), une végétation halophyte tolérante au sel est prévue.

8. Installation selon l'une quelconque des revendications 1 à 7,
**caractérisée en ce que**
au moins un moyen de séparation de matières solides destiné à séparer des matières solides de l'eau (2) est prévu, en particulier au moins un bassin de décantation.

9. Installation selon l'une quelconque des revendications 1 à 8,
**caractérisée en ce que**
au moins un moyen de séparation de pétrole destiné à séparer du pétrole de l'eau (2) est prévu, en particulier un dispositif provoquant une coalescence par gravité et une flottation de gouttelettes de pétrole et/ou un moyen d'écrémage (70) destiné à retirer du pétrole flottant de la surface de l'eau saline (2).

10. Installation selon l'une quelconque des revendications 1 à 9,
**caractérisée en ce que**
à la suite de l'au moins un bassin bioréacteur de périphyton (22), au moins un étang d'évaporation destiné à éliminer l'eau traitée est prévu.

11. Procédé de traitement d'eau saline (2) ayant une salinité supérieure à celle de l'eau de mer, à savoir un TDS supérieur à 40 000 ppm, et contenant du pétrole et/ou d'autres contaminants, au moyen d'une installation (10) selon l'une quelconque des revendications 1 à 10, comprenant les étapes suivantes consistant à :
alimenter l'eau saline (2) par une canalisation d'alimentation vers au moins un bassin de traitement intégré dans une topographie naturelle ou artificielle, et
traiter biologiquement l'eau saline (2) dans le bassin de traitement, tandis que l'eau saline (2) s'écoule à travers le bassin de traitement d'une entrée vers une sortie,
**caractérisé en ce que**
l'au moins un bassin de traitement est un bassin bioréacteur de périphyton (22) qui est conçu en tant que bassin bioréacteur, qui comprend du périphyton (20), dans lequel la teneur en pétrole et/ou en d'autres contaminants de l'eau saline (2) est réduite par le périphyton (20),
le périphyton (20) comprend un assemblage de périphyton tolérant au sel obtenu par croissance en tant que mats et fixé à des biofilms de croissance à l'intérieur d'une colonne d'eau de l'au moins un bassin bioréacteur de périphyton (22), et
le traitement physique et biologique de l'eau saline (2) est effectué par une biodégradation des contaminants par l'intermédiaire de processus biogéochimiques et physiques médiés par périphyton à l'intérieur du bassin bioréacteur de périphyton (22) formé en tant qu'étang peu profond permettant une exposition à la lumière solaire pour favoriser la production de biofilms de croissance fixés à l'intérieur de la colonne d'eau et pour faciliter la rétention de contaminants tels que du pétrole et des hydrocarbures à partir de l'eau saline (2).
